Europäisches Patentamt

European Patent Office

Office européen des brevets

(11) Veröffentlichungsnummer: **0 520 078 A1**

# (12) EUROPÄISCHE PATENTANMELDUNG

(21) Anmeldenummer: **91110588.0**

(22) Anmeldetag: **26.06.91**

(51) Int. Cl.5: **G01N 3/30**

(43) Veröffentlichungstag der Anmeldung:
**30.12.92 Patentblatt 92/53**

(84) Benannte Vertragsstaaten:
**AT BE CH DE DK ES FR GB GR IT LI LU NL SE**

(71) Anmelder: **CARL SCHENCK AG**
**Landwehrstrasse 55 Postfach 40 18**
**W-6100 Darmstadt(DE)**

(72) Erfinder: **Pohl, Andreas, Ing. grad.**

Ringstrasse 69
**W-6114 Gross-Umstadt(DE)**
Erfinder: **Beran, Josef, Dipl.-Ing.**
**Holzgasse 46**
**W-6101 Rossdorf 1(DE)**

(74) Vertreter: **Brandt, Ernst-Ulrich**
**Fa. Carl Schenck AG Patentabteilung**
**Landwehrstrasse 55 Postfach 40 18**
**W-6100 Darmstadt 1(DE)**

(54) **Maschine für die Schnellzerreissprüfung.**

(57) Bei einer Maschine für die Schnellzerreißprüfung von Proben, mit einem Maschinengestell, einer Kraftmeßeinrichtung, und einer einen Belastungshub ausführenden Belastungeinrichtung, wobei die Zugprobe nach Durchlaufen eines Vorlaufhubes der Belastungseinrichtung an das Maschinengestell und/oder die Belastungseinrichtung ankoppelbar ist, sollen bei einfachem und kostengünstigem Aufbau Entkoppelungen vermieden werden. Dies wird dadurch erreicht, daß an mindestens einer Ankoppelstelle mindestens eine lösbare Masse (13, 23) angeordnet ist und diese Masse (13, 23) beim Ankoppelvorgang entkoppelt wird.

Fig.1

EP 0 520 078 A1

Die Erfindung betrifft eine Maschine für die Schnellzerreißprüfung gemäß Oberbegriff des Patentanspruchs 1.

Bei der Schnellzerreißprüfung müssen die Zugproben mit einer schlagartig am Beginn des Belastungshubes auf einen vorgegebenen Wert ansteigenden Belastungsgeschwindigkeit belastet werden. Bei bekannten Maschinen für die Schnellzerreißprüfung ist üblicherweise eine Vorlaufeinrichtung vorgesehen, durch die eine Beschleunigungsstrecke geschaffen wird, auf der die Belastungeinrichtung auf den vorgegebenen Geschwindigkeitswert beschleunigt wird.

Vorlaufeinrichtungen sind im Augenblick der Kopplung nach Durchlaufen der Vorlaufstrecke problematisch, da eine durch die Belastungeinrichtung bewegte Masse auf die ruhende Masse der mit der Zugprobe verbundenen Bauteile trifft. Bei diesem elastischen Stoß werden die Belastungseinrichtungen und das mit der Zugprobe verbundene zu beschleunigende Bauteil entkoppelt und entsprechend den Massen auf verschiedene Geschwindigkeiten gebracht. Der entkoppelte Teil bestimmt die Zerreißenergie, die von der Entkopplungsgeschwindigkeit und der Masse bestimmt ist.

Bei einer bekannten Schnellzerreißmaschine (EP 0 314 829) wird das Abkoppeln weitgehend dadurch verhindert, daß an der Zugprobe angebrachte Einspannbacken an ihren Außenseiten Keilflächen aufweisen, die mit entsprechenden Keilflächen, die an der Belastungseinrichtung bzw. am Maschinengestell angeordnet sind, in Eingriff treten. Die Fertigung der Einspannbacken mit Keilflächen und entsprechenden Gegenlagern muß jedoch sehr exakt sein und ist dadurch sehr teuer.

Aufgabe der Erfindung ist es daher, eine Schnellzerreißmaschine der eingangs genannten Art zu schaffen, die bei einfachem und kostengünstigen Aufbau die Entkoppelungen vermeidet, so daß die Probe die Geschwindigkeit der Belastungseinrichtung annehmen muß.

Diese Aufgabe wird erfindungsgemäß dadurch gelöst, daß an der mindestens einen Ankoppelstelle mindestens eine lösbare Masse angeordnet ist und diese Masse beim Ankoppelvorgang entkoppelt wird.

Der Ankoppelvorgang einer durch die Belastungseinrichtung bewegten Masse an die ruhende Masse der mit der Zugprobe verbundenen Bauteile entspricht einem elastischen Stoß. Da an der Ankoppelstelle mindestens eine lösbare Masse angeordnet ist, wird bei dem elastischen Stoß die Impulsenergie an die lösbare Masse abgegeben und die lösbare Masse wird entkoppelt.

Die ruhende Masse der mit der Zugprobe verbundenen Bauteile wird somit sofort an die durch die Belastungseinrichtung bewegte Masse angekoppelt, so daß die Zerreißgeschwindigkeit auch schon unmittelbar nach dem Ankoppeln der Zugprobe gleich der Geschwindigkeit der Belastungseinrichtung ist.

Eine vorteilhafte Ausgestaltung sieht vor, daß die lösbare Masse als Ringmagnet ausgebildet ist. Der Ringmagnet kann an jeder beliebigen Stelle lösbar angeordnet werden, da er durch die Magnetkräfte gehalten wird.

Da die Kraftmeßeinrichtung als Kraftmeßdose ausgebildet sein kann, die zwischen Maschinengestell und oberer Einspannvorrichtung angeordnet ist, und an der oberen Einspannvorrichtung ebenfalls ein Ringmagnet angeordnet ist, wird ein Überschwingen der Kraftmeßdosenantwort auf den Kopplungsvorgang verhindert. Beim Ankoppelvorgang wird der am oberen Einspanngehäuse anliegende Ringmagnet ebenfalls entkoppelt, so daß die schwingende Kraftmeßdosenmasse plus der Masse der Anspannung beim Ankoppelvorgang nicht auf eine höhere Geschwindigkeit angestoßen wird als die eingeleitete Kolbengeschwindigkeit.

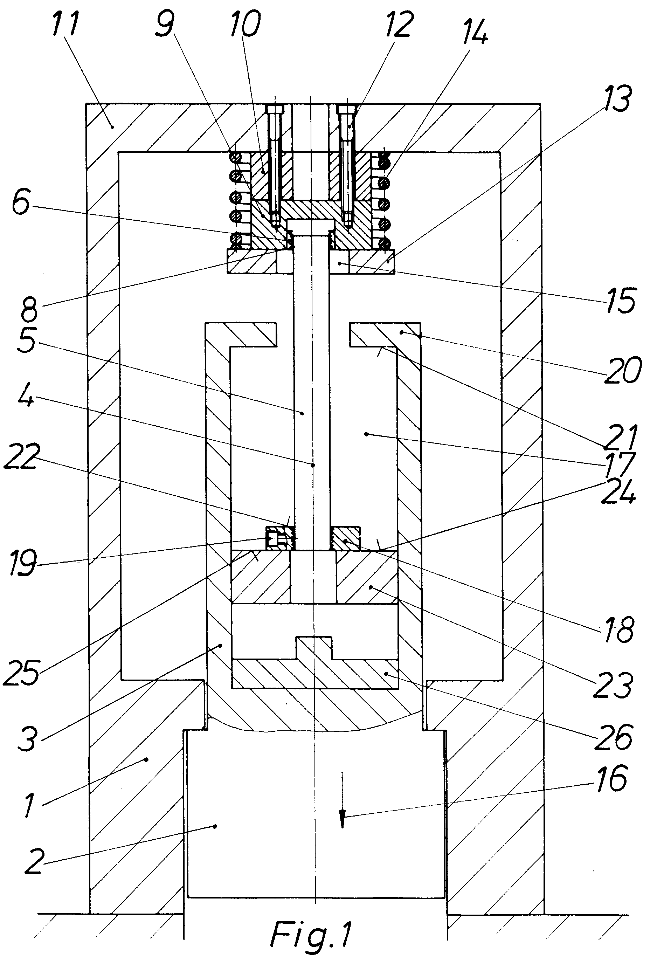

Die in Fig. 1 dargestellte Prüfmaschine für die Schnellzerreißprüfung von Materialproben weist ein rahmenförmiges Maschinengestell 1 auf, in dem eine Belastungeinrichtung 2 angeordnet ist. Die Belastungeinrichtung 2 besitzt beispielsweise einen Hydraulikzylinder für einen Hubkolben 3 und weist eine Belastungsachse 4 auf. Das obere Ende einer Zugprobe 5, die eine Rundprobe oder eine Flachprobe sein kann, ist zwischen Einspannbacken 6 mittels Schrauben eingespannt. Die Schrauben sind in der schematischen Darstellung der Schnellzerreißmaschine gemäß Fig. 1 nicht dargestellt. Zur sicheren Aufnahme der Zugprobe 5 weisen die Einspannbacken 6 an den Einspannstellen Rillen 8 auf. Beim Festklemmen der Probenenden mittels der Schrauben greifen die Rillen 8 zahnartig in das Probenende ein, wodurch eine kraft-/formschlüssige Aufnahme der Zugprobe 5 erreicht wird. Die Einspannbacken 6 sind in einem Einspanngehäuse 9 verschiebbar geführt, welches unter Zwischenlage einer Kraftmeßdose 10 mittig an einer oberen Quertraverse 11 des Maschinengestells 1 mittels Schrauben 12 befestigt ist.

An der der Probe 5 zugewandten Stirnseite des Einspanngehäuses 9 ist ein Ringmagnet 13 angeordnet, dessen Längsachse in der Belastungsachse 4 liegt. Der Ringmagnet 13 ist über eine elastische Verbindung beispielsweise über Federn 14 an der oberen Quertraverse 11 des Maschinengestells 1 aufgehängt. Der Ringmagnet 13 liegt mit seiner dem oberen Probenende zugewandten Stirnfläche an der Stirnfläche des Einspanngehäuses 9 an und wird durch die Magnetkräfte in dieser Position festgehalten. Die mittige Durchgangsbohrung 15 des Ringmagneten 13 ist mindestens so groß, daß die Probe 5 durchgeführt werden kann.

Das untere Ende der Zugprobe 5 ist nach Durchlaufen einer Vorlaufstrecke des Hubkolbens 3 in Richtung des Pfeils 16 an den Hubkolben 3 ankoppelbar, so daß die Zugprobe 5 aufgrund der kinetischen Energie des Hubkolbens 3 mit einer je nach der Zerreißenergie annähernd konstant bleibenden Prüfgeschwindigkeit zerrissen wird. Das untere Ende der Zugprobe 5 ragt vor Versuchsbeginn (Darstellung in Fig. 1) in eine Ausnehmung 17 des Hubkolbens 3, wobei die Tiefe der Ausnehmung 17 größer als der erforderliche Vorlaufhub der Belastungseinrichtung 2 ist.

Zwecks Ankoppeln der bewegten Masse des Hubkolbens 3 an die ruhende Masse der Probe sind beiderseits des unteren Endes der Zugprobe 5 Einspannbacken 18 angeordnet, die durch Schrauben 19 miteinander verbunden und gegen die Zugprobe 5 vorgespannt sind. Der Hubkolben 3 weist an seinem oberen Ende einen nach Innen ragenden ringförmigen Rand 20 auf. Die dem unteren Ende der Probe zugewandte Fläche des ringförmigen Randes 20 dient als Anschlagfläche 21 und trifft nach Durchlaufen der Vorlaufstrecke auf die oberen Stirnflächen 22 der Einspannbacken 18. Um bei diesem elastischen Stoß das Abkoppeln der mit der Zugprobe 5 verbundenen Einspannbacken 18 mit der Belastungseinrichtung 2 bzw. dem Hubkolben 3 zu verhindern, ist unmittelbar an dem unteren Ende der Zugprobe 5 ein weiterer Ringmagnet 23 angeordnet, dessen Außendurchmesser dem Innendurchmesser der Ausnehmung 17 des Hubkolbens 3 angepaßt ist und somit in Belastungsrichtung geführt ist. Der Ringmagnet 23 liegt mit seiner der Probe 5 zugewandten Stirnfläche 24 an der unteren Stirnfläche 25 der Einspannbacken 18 an und wird durch die Magnetkräfte in dieser Position festgehalten. Vorzugsweise wird das Verhältnis Masse der Einspannbacken 18 zur Masse des Ringmagneten 23 1:3 gewählt.

Durch die Belastungseinrichtung 2 wird der Hubkolben 3 auf die vorgegebene gewünschte Prüfgeschwindigkeit beschleunigt. Nach Durchlaufen der Vorlaufstrecke trifft die Anschlagfläche 21 des Hubkolbens 3 auf die hintereinander angeordneten ruhenden Massen der mit der Probe 5 verbundenen Einspannbacken 18 und des Ringmagneten 23. Aufgrund der bei diesem elastischen Stoß geltenden physikalischen Grundgesetze, wird die Zugprobe 5 mit angeschraubten Einspannbacken über die Anschlagfläche 21 des Hubkolbens 3 mitgenommen ohne zu entkoppeln, da die Impulsenergie an den Ringmagneten 23 abgegeben wird, der bei diesem elastischen Stoß abgekoppelt wird. Zur Aufnahme der kinetischen Energie des abgekoppelten Ringmagneten 23 ist am Boden der Ausnehmung 17 des Hubkolbens 3 ein Dämpfer 26 vorgesehen.

Um bei dem beschriebenen Ankoppelvorgang der mit der Zugprobe 5 verbundenen Einspannbak-

ken 18 an die Belastungseinrichtung 2 bis zum anschließenden Zerreißen der Zugprobe 5 den dabei auftretenden tatsächlichen Kraftverlauf mittels der Kraftmeßeinrichtung 10 erfassen zu können, wird der an dem Einspanngehäuse 9 anliegende Ringmagnet 13 beim Ankoppelvorgang ebenfalls entkoppelt, so daß die schwingende Kraftmeßdosenmasse plus der Masse der Einspannung beim Koppelvorgang nicht auf eine höhere Geschwindigkeit angestoßen wird als die eingeleitete Kolbengeschwindigkeit.

**Patentansprüche**

1. Maschine für die Schnellzerreißprüfung von Proben, mit einem Maschinengestell, einer Kraftmeßeinrichtung, und einer einen Belastungshub ausführenden Belastungeinrichtung, wobei die Zugprobe nach Durchlaufen eines Vorlaufhubes der Belastungseinrichtung an das Maschinengestell und/oder die Belastungseinrichtung ankoppelbar ist, dadurch gekennzeichnet, daß an mindestens einer Ankoppelstelle mindestens eine lösbare Masse (13, 23) angeordnet ist und diese Masse (13, 23) beim Ankoppelvorgang entkoppelt wird.

2. Maschine für die Schnellzerreißprüfung von Proben nach Patentanspruch 1, dadurch gekennzeichnet, daß ein Ende der Probe (5) über eine Einspanneinrichtung (9, 6) mit dem Maschinengestell (1) oder der Belastungseinrichtung (2) fest verbunden ist und das andere Ende der Probe (5) Einspannbacken (8) aufweist, die nach Durchlaufen eines Vorlaufhubes der Belastungseinrichtung (2) an die Belastungseinrichtung (2) bzw. das Maschinengestell (1) ankoppelbar sind.

3. Maschine für die Schnellzerreißprüfung von Proben nach Anspruch 2, dadurch gekennzeichnet, daß die Belastungseinrichtung (2) an ihrem der Probe (5) zugekehrten Ende eine Ausnehmung (17) aufweist, deren Tiefe mindestens den erforderlichen Vorlaufhub der Belastungeinrichtung (2) entspricht.

4. Maschine für die Schnellzerreißprüfung von Proben nach einem der vorhergehenden Ansprüche, dadurch gekennzeichnet, daß die Kraftmeßeinrichtung (10) als Kraftmeßdose ausgebildet ist, die zwischen dem Maschinengestell (1) und der oberen Einspannvorrichtung (6, 9) angeordnet ist.

5. Maschine für die Schnellzerreißprüfung von Proben nach einem oder mehreren der vorhergehenden Ansprüche, dadurch gekennzeichnet, daß die lösbare Masse (13, 23) als Ringmagnet ausgebildet ist.

6. Maschine für die Schnellzerreißprüfung von Proben nach einem oder mehreren der vorhergehenden Ansprüche, dadurch gekennzeichnet, daß ein erster Ringmagnet (13) mit seiner oberen Stirnfläche an der Stirnfläche der oberen Einspannvorrichtung anliegt und ein zweiter Ringmagnet (23) an der der Probe abgewandten Stirnfläche der Einspannbacken am unteren Ende der Probe (5) anliegt.

7. Maschine für die Schnellzerreißprüfung von Proben nach Anspruch 6, dadurch gekennzeichnet, daß der Außendurchmesser des zweiten Ringmagneten (23) dem Innendurchmesser der Ausnehmung (17) entspricht.

Fig.1

Europäisches
Patentamt

**EUROPÄISCHER RECHERCHENBERICHT**

Nummer der Anmeldung

EP    91 11 0588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 314 829 (CARL SCHENCK AG) <br> * das ganze Dokument * <br> --- | 1 | G01N3/30 |
| A | US-A-2 520 979 (E.C. TAYLOR ET AL.) <br> * das ganze Dokument * <br> --- | 1 | |
| A | MEASUREMENTS. <br> Bd. 9, Nr. 2, April 1991, LONDON GB <br> Seiten 73 - 80; <br> K. KUSSMAUL ETAL.: 'A new generation of high-speed tensile testing machines' <br> * das ganze Dokument * <br> --- | 1 | |
| A | US-A-3 102 421 (R.R. COSNER ET AL.) <br> * das ganze Dokument * <br><br> ----- | 1 | |
| | | | **RECHERCHIERTE SACHGEBIETE (Int. Cl.5)** <br><br> G01N |

Der vorliegende Recherchenbericht wurde für alle Patentansprüche erstellt

| Recherchenort | Abschlußdatum der Recherche | Prüfer |
|---|---|---|
| BERLIN | 05 MAERZ 1992 | BRISON O.P. |